# EUROPÄISCHE PATENTSCHRIFT

(11) **EP 0 625 249 B1**
(45) Veröffentlichungstag und Bekanntmachung des Hinweises auf die Patenterteilung: **20.11.1996**
(21) Anmeldenummer: 93903914.5
(22) Anmeldetag: 05.02.1993
(51) Int. Cl.: F16K 1/44

(54) **DOPPELSITZVENTIL**
DOUBLE SEAT VALVE
SOUPAPE A DOUBLE SIEGE

(30) Priorität: 08.02.1992 DE 4203723; 08.02.1992 DE 4203724
(43) Veröffentlichungstag der Anmeldung: 23.11.1994
(73) Patentinhaber: OTTO TUCHENHAGEN GmbH & Co. KG, 21514 Büchen (DE)
(72) Erfinder: MIETH, Hans, Otto, D-22514 Büchen (DE)
(74) Vertreter: Glaeser, Joachim, Dipl.-Ing.
(86) Internationale Anmeldenummer: EP9300277
(87) Internationale Veröffentlichungsnummer: WO9316306

(56) Entgegenhaltungen:
- EP-A- 0 039 319
- DE-A- 2 532 838
- DE-A- 2 643 273
- DE-A- 3 030 989
- DE-A- 4 118 874
- US-A- 4 655 253

## Beschreibung

Die Erfindung betrifft ein Doppelsitzventil mit zwei seriell angeordneten, relativ zueinander bewegbaren Schließgliedern nach dem Oberbegriff des Anspruchs 1.

Für Doppelsitzventile in ihrer unterschiedlichsten Ausprägung haben sich im Laufe ihrer langjährigen Fortentwicklung eine Reihe von Eigenschaften ergeben, von denen einige unabdingbar und die anderen zumindest wünschenswert sind. Ohne diese Eigenschaften in die eine oder andere Kategorie einzuordnen, seien sie nachstehend kurz umrissen:
- selbsttätige Ableitung der anfallenden Schaltleckage und/oder anderer Leckagen aus dem Leckagehohlraum in die Umgebung des Doppelsitzventils (nachfolgend kurz mit "Drainage" bezeichnet);
- antriebsseitige Demontage der Innenteile des Ventils;
- gehäusefester Sitz (die Ventilsitze können bei der gemeinsamen Demontage des Antriebs und der Ventilinnenteile im Gehäuse verbleiben);
- freie Wahl der Dichtungsmittel der Schließglieder hinsichtlich ihrer Wirkungsrichtung in Bezug auf die zugeordnete Sitzfläche (nachfolgend werden die Dichtungsmittel bei radial dichtenden Schließgliedern mit "radialen Dichtungsmitteln" bezeichnet, im Gegensatz zu axial dichtenden Schließgliedern, sogenannten Sitztellern, mit "axialen Dichtungsmitteln", bei denen diese vorzugsweise in axialer Richtung wirken);
- Sitzreinigungsfähigkeit durch Anliften der Schließglieder;
- leckagearmes oder -freies Schalten;
- Druckentlastung des Leckagehohlraumes beispielsweise beim Anliften der Schließglieder zum Zwecke der Sitzreinigung;
- Erfüllung der Forderung des US-amerikanischen "3A-Standard", daß der Leckagehohlraum mit einem der Nennweite des größten an das Ventil angeschlossenen Rohres entsprechenden Querschnitt drainierbar mit der Atmosphäre verbunden sein soll.

Es haben sich im wesentlichen zwei Grundbauarten der Doppelsitzventile entwickelt, nachfolgend mit A und B bezeichnet, von denen bislang keine in der Lage ist, sämtliche vorgenannten Eigenschaften in sich zu vereinigen.

Ein Doppelsitzventil der einleitend gekennzeichneten Gattung, ein typischer Vertreter der Grundbauart A, ist beispielsweise aus der DE 25 32 838 C2 bekannt. Dieses Doppelsitzventil weist zwei mit jeweils axialen Dichtungsmitteln ausgebildete Schließglieder (nachfolgend auch mit "axiales Schließglied" bezeichnet) auf, die sowohl in ihrer Schließ- wie auch in ihrer Offenstellung einen Leckagehohlraum begrenzen, der in der bevorzugten vertikalen Einbaulage des Ventils über das mit dem unteren Schließglied verbundene und durch das untere Ventilgehäuseteil hindurch- und aus diesem in die Umgebung des Ventils herausgeführte Rohr drainiert werden kann. Das Ventil öffnet nach oben und ist nach oben ausbaubar, und es verfügt über einen gehäusefesten Sitz.

Die 3A-Fähigkeit ist bei dem bekannten Ventil nicht gegeben; sie ist auch durch konstruktive Abwandlung, durch Querschnittsvergrößerung des der Abfuhr der Drainage dienenden Ablaufrohres, nicht erreichbar, da die 3A-Forderung konkret so definiert ist, daß der Verbindungsweg zwischen dem Leckagehohlraum und der Umgebung des Doppelsitzventils mit dessen Nenndurchtrittsquerschnitt auszubilden ist. Unter Nenndurchtrittsquerschnitt des Doppelsitzventils wird hier der Querschnitt des an seine Gehäuseanschlüsse unmittelbar anschließbaren größtmöglichen Rohres definiert. Bei sachgerechter Bemessung des Ventils ist dieses auch im Sitzbereich mit dem vorgenannten Nenndurchtrittsquerschnitt oder mit einem Querschnitt ausgelegt, der von diesem Richtwert um einen tolerierbaren Betrag abweicht. Da das Ventil nach oben öffnet und das Ablaufrohr den Sitz in der Offenstellung des Ventils nach unten durchdringt, führt eine nennenswerte Vergrößerung des Drainagequerschnittes über das heute übliche Maß hinaus zu einer untragbaren Verengung des freien Sitzquerschnittes (kv-Wert), es sei denn, das Verhältnis von Sitz- und Nennquerschnitt der Ventile würde in einer Weise verändert, daß die Strömungsführung bei der Durchflußreinigung und die Wirtschaftlichkeit in Frage gestellt sind.

Falls von Doppelsitzventilen leckagearmes oder -freies Schalten gefordert wird, ist es eine heute zunehmend gestellte Forderung, zumindest das unabhängig betätigbare Schließglied mit radialen Dichtungsmitteln (nachfolgend auch mit "radiales Schließglied" bezeichnet) auszustatten. Bei der Grundbauart A ist dies stets das untere Schließglied, welches dann zwingend mit einem Druckausgleichskolben zu versehen ist, damit bei Druckschlägen im Ventilgehäuseteil ein Aufdrücken des Schließgliedes aus seiner Schließlage heraus verhindert wird. Der Druckausgleichskolben greift durch das untere Ventilgehäuseteil hindurch und ist aus diesem in die Umgebung herausgeführt. Der große Querschnitt des Druckausgleichskolbens kann jedoch im Hinblick auf eine Erfüllung der 3A-Forderung prinzipiell nicht für eine Vergrößerung des Drainageauslaufs, der durch ihn hindurchgeführt ist, genutzt werden, da der Sitzbereich in der Offenstellung des Ventils nicht nennenswert verengt werden darf. Die aus diesen Gründen resultierende notwendige radiale Einschnürung des Druckausgleichskolbens in diesem Bereich wird von den gleichen Bemessungskriterien bestimmt wie die Auslegung des Drainageauslaufs bei dem einleitend dargestellten bekannten Doppelsitzventil. Ein typisches Doppelsitzventil der letztgenannten Ausgestaltung ist im einzelnen in der EP 00 39 319 B1 beschrieben. Dieses bekannte Doppelsitzventil ist darüber hinaus auch noch an seinem oberen Schließglied, welches mit axialen Dichtungsmitteln ausgestattet ist, mit einem Druckausgleichskolben versehen, wobei dessen großvolumiger Innenraum nur für Antriebselemente genutzt wird.

Die Grundbauart B zeichnet sich im wesentlichen aus durch Drainage des Leckagehohlraums und öffnungsbewegung nach unten. Eine typische Ausgestaltung dieser Bauart mit axialen Dichtungsmitteln ist in der DE 26 43 273 B2 beschrieben. Das Ventil verfügt über einen gehäusefesten Sitz, die Ventilinnenteile sind daher zwangsläufig nur nach unten, also auf der dem Antrieb abgewandten Seite ausbaubar, der Antrieb befindet sich auf der Oberseite des Ventils. Die Drainage erfolgt über ein Ablaufrohr mit relativ großem Durchtrittsquerschnitt. Der Drainageauslauf kann im Hinblick auf die 3A-Forderung aber nicht konsequent genutzt werden, weil darin Antriebselemente (Ventilstange, Stangenlagerung, Feder, Federwiderlager und Verbindungsstege) untergebracht sind. Darüber hinaus erfordert dieses bekannte Ventil für den Ausbau der Ventilinnenteile nach unten deren Trennung vom Antrieb und eine entsprechende Ausbauhöhe, die nicht in allen Anwendungsfällen gegeben ist.

Um bei der aus der DE 26 43 273 B2 bekannten Grundbauart B trotz Verwendung axialer Dichtungsmittel eine antriebsseitige Demontage der Ventilinnenteile, d. h. eine Demontage nach oben zu verwirklichen, wurde vorgeschlagen, einen lösbaren Sitzring vorzusehen, welcher über Stützstangen mit dem in Einbaulage oberen Flansch des oberen Ventilgehäuseteils verbunden ist (DE 30 30 989 Al). Als Nachteil hierbei ergibt sich, daß die Stützstangen den Produktfluß im oberen Ventilgehäuseteil behindern und bei der Durchflußreinigung Problemzonen mit Toträumen und Reinigungsschatten hervorrufen.

Falls bei der Grundbauart B leckagearmes bzw. -freies Schalten gefordert wird, ist das obere, unabhängig angetriebene Schließglied mit radialen Dichtungsmitteln auszubilden. Dies erfordert zwingend, aus den eingangs genannten Gründen, die Anordnung eines Druckausgleichskolbens an diesem Schließglied. Sofern auch das untere Schließglied radial dichtend ausgebildet wird, so ist auch hier ein Druckausgleichskolben vorzusehen. Bei einer derartigen Schließgliedkonfiguration ist dann zwar eine antriebsseitige Demontage der Ventilinnenteile möglich, falls beide Schließglieder auf eine gemeinsame zylindrische Ventilsitzfläche arbeiten, jedoch bleibt die 3A-Forderung bei den bisherigen Ausführungen auch bei dieser Grundbauart unerfüllt (vgl. US 4 655 253), da die großvolumigen Innenräume der beiden Druckausgleichskolben auch hier für die Unterbringung von Antriebselementen genutzt werden.

Die Möglichkeit, bei einem Doppelsitzventil der Grundbauart B den Drainageauslauf im unteren Schließglied im Sinne einer weitestgehenden Erfüllung der 3A-Forderung auszugestalten, wurde erstmals in der DE 41 18 874 Al dargelegt. Dieser Drainageaustritt kann, da nach unten gerichtet, die Funktion der Leckageraum-Drainage und, da mit einem freien Querschnitt in Größenordnung der Ventilnennweite ausgelegt, auch der Leckageraum-Druckentlastung erfüllen. Letztere muß beispielsweise während der Sitzreinigung wirksam werden, die zunehmend bei Doppelsitzventilen gefordert wird und an Bedeutung gewinnt, oder nach Aufdrücken der Schließglieder infolge von Druckschlägen. Die bei Doppelsitzventilen der einleitend gekennzeichneten Gattung durch Anliften der Schließglieder hervorgerufenen Druckspitzen wurden bislang unterschätzt oder gar nicht zur Kenntnis genommen.

Leider ist der Anwendung von radialen Dichtungsmitteln bei derartigen Doppelsitzventilen immer noch eine technologische Grenze dergestalt gesetzt, daß abrasive, zur Kristallbildung neigende und/oder heiße Medien unter hohem Druck nur mit axialen Dichtungsmitteln sicher zu beherrschen sind.

Die vorliegende Erfindung hat sich die Aufgabe gestellt, Doppelsitzventile der eingangs gekennzeichneten Grundbauart A so weiterzuentwickeln, daß auch bei diesen unter Aufrechterhaltung ihrer Prinzipvorzüge, wie gehäusefester Sitz und einfacher antriebsseitiger Demontage der Ventilinnenteile bei freier Wahl zwischen axialen und radialen Dichtungsmitteln, die Forderung nach einem nicht nur drainierbaren, sondern auch druckentlasteten Leckagehohlraum unter allen denkbaren Betriebsbedingungen erfüllt werden kann. Der Erfindung liegt insbesondere die Aufgabe zugrunde, beim Anliften der Schließglieder zum Zwecke der Sitzreinigung zu verhindern, daß im Leckagehohlraum Druckspitzen auftreten bzw. diese ggf.auf eine tolerierbare Größe zu begrenzen.

Diese Aufgabe wird durch Anwendung der Kennzeichenmerkmale des Anspruchs 1 gelöst. Vorteilhafte Ausgestaltungen des vorgeschlagenen Doppelsitzventils sind Gegenstand der Unteransprüche.

Die bisher bekannt gewordenen Doppelsitzventile der einleitend gekennzeichneten Gattung weisen teilweise auf ihrer dem Drainageauslauf abgewandten Seite eine Verbindung zwischen dem Leckagehohlraum und der Umgebung des Ventils auf, die entweder in der inneren Ventilstange oder im Ringspalt zwischen Ventilstange und der sie umgebenden Hohlstange ausgebildet ist und die ausschließlich der Zufuhr von Reinigungsmittel bei der Reinigung des Leckagehohlraumes und des Drainageauslaufes (Reinigungsmittelzufuhr von außen) dient. Dieser Verbindungsweg ist im Verhältnis zu dem in seinem Querschnitt relativ kleinen Drainage-Ablaufrohr derart ausgelegt, daß bei Zufuhr von Reinigungsmittel über ihn ein Druckaufbau im Leckagehohlraum vermieden wird. Zusätzlich ist der Austritt des Verbindungsweges in den Leckagehohlraum düsenartig verengt, damit ein gerichteter Spritzstrahl mit hoher kinetischer Energie auf die zu reinigenden Bereiche des Leckagehohlraums gelenkt werden kann, zwecks deren Minimierung es bislang allseits anerkanntes Bemessungsprinzip ist, den Leckagehohlraum so raumsparend wie möglich zwischen den beiden Schließgliedern auszubilden.

Andererseits hat in der Praxis bei Doppelsitzventilen die sogenannte Sitzreinigung durch Anliften der Schließglieder zunehmend an Bedeutung gewonnen, ohne daß die Konstruktions- und Bemessungskriterien für den Leckagehohlraum und den Drainageablauf revidiert wurden. Es wurde bislang nicht erkannt oder in seiner Bedeutung für die gesamte Sicherheitsphilosophie des Doppelsitzventils unterschätzt, daß es durch Anliften der Schließglieder im Zuge der Sitzreinigung zu einem unzulässigen Druckaufbau im Leckagehohlraum kommen kann, weil der Drainageauslauf die eintretenden Flüssigkeitsmengen nicht ohne Differenzdruck gegenüber dem Ziel des Flüssigkeitstransportes ableiten kann.

Die erfinderische Idee setzt nun bei der Erkenntnis an, daß bei sinnvoller Nutzung der Tatsache, daß die Sitzreinigung durch Anliften stets nur pulsierend, d.h. in gesteuerten kurzzeitigen Takthüben der Schließglieder erfolgt, so daß Reinigungsflüssigkeit zwar mit großer Momentanleistung, aber in begrenzbarem Volumen pro Takt, in den Leckagehohlraum eindringt. Stellt man dieser Flüssigkeitsmenge ein ausreichendes Speichervolumen des Leckagehohlraumes zur Verfügung, ist der Drainageablauf nicht mehr zur simultanen Abführung der Flüssigkeit mit ihrer Zulaufleistung gezwungen und die Druckspitze wird abgebaut, und zwar umso wirkungsvoller je größer das Speichervolumen im Verhältnis zu der durch den Lifttakt definierten Flüssigkeitsmenge ist. In jedem Falle muß das Speichervolumen so groß sein, daß auch bei der größten Flüssigkeitsmenge noch ein Gasraum im Speicher erhalten bleibt. Wird dieses Gasvolumen stark komprimiert, nähert sich der Druckaufbau wieder der im ursprünglichen engen Leckagehohlraum auftretenden Druckspitze, die unbedingt vermieden werden muß.

Die gemäß des ersten erfinderischen Ansatzes vorzusehende Erweiterung des üblichen engen Leckagehohlraumes zu einem im Rahmen der Raumverhältnisse größtmöglichen geschlossenen Speichervolumen ist nach vorstehender Darlegung zwar zum Abbau von Druckspitzen, nicht aber zu ihrer völligen Beseitigung geeignet. Dazu bedarf es gemäß der Erfindung einer weiteren Maßnahme, indem nämlich der bei einigen Doppelsitzventilen der einleitend gekennzeichneten Gattung antriebsseitig vorhandene Verbindungsweg zwischen dem Leckagehohlraum und der Umgebung des Ventils, der bislang ausschließlich für die externe Reinigungsmittelzufuhr genutzt wird, als zweite atmosphärische Verbindung des Leckagehohlraumes für die Druckentlastung bereitgestellt wird.

Wird dieser Weg außerdem auch weiterhin als Reinigungs- oder Desinfektionsmittelzulauf gebraucht, weil diese Art der Behandlung aus anlagenspezifischen Gründen neben der Sitzreinigung zur mikrobiologischen Kontrolle des Doppelsitzventils für erforderlich gehalten wird, so wird gemäß einer weiteren vorteilhaften Ausgestaltung der Erfindung dieser Weg am Medienzulauf außerhalb des Doppelsitzventils mit einem umschaltbaren Anschluß für Medium und Atmosphäre ausgerüstet.

Die erfindungsgemäße Erweiterung des Leckagehohlraumes zu einem Speicher mit oder ohne steuerbare Entlüftung mit einem kleinen, nur auf das Abblasen der beim Auffüllen des Speichers verdrängten und der beim Leerlaufen des Speichers durch den Drainageablauf nachgesaugten Luft bzw. für den externen Reinigungsmittelzulauf ausgelegten Querschnitt findet ihre funktionelle Grenze bei einer Überfüllung des Speichervolumens. Ein solcher Fall kann in der Praxis eintreten bei Fehlfunktionen der Lifteinrichtung, beispielsweise Versagen des Liftmechanismus, versehentliche Daueransteuerung, Schließhemmung des Schließgliedes durch eingeklemmte Fremdkörper oder auch Verletzen der Dichtungsmittel der Schließglieder. Bei derartigen Ereignissen läuft der Speicher voll, und es steht in ihm wieder der oben beschriebene Druck an, der sich mit der Sicherheitsphilosophie des Doppelsitzventils nicht verträgt.

Der Entlüftungsanschluß über den eng bemessenen, umfunktionierten externen Reinigungsmittelzulauf kann nur wenig zur Druckentlastung beitragen, wenn er bei Überfüllen des Speichervolumens mit Flüssigkeit statt Luft beaufschlagt ist. Hier greift nun die nächste Stufe der Erfindung, die eine Fortführung des auf den größtmöglichen, die antriebsseitige Demontage der Ventilinnenteile gerade noch zulassenden Durchmesser des Speicherbehälters/Leckagehohlraumes in die Umgebung des Ventils mit vollem Querschnitt vorsieht. Dies gelingt allerdings nicht mit den bisherigen für derartige Verbindungswege angewandten Bemessungs- und Gestaltungsregeln. Gemäß der Erfindung ist in diesem Zusammenhang vorgesehen, daß der Verbindungsweg unmittelbar anschließend an den Leckagehohlraum und in einem Teil seines folgenden weiteren Verlaufs gegenüber seinem übrigen Teil auf einen Durchtrittsquerschnitt erweitert ist, der den Leckagehohlraum raumbildend vergrößert. Dadurch gewinnt der Leckagehohlraum, im Gegensatz zu bisher bekannten Ausgestaltungen, das zur Begrenzung von Druckspitzen notwendige Speichervolumen. Grundsätzlich kann das bereitzustellende Speichervolumen aus dem vorgesehenen erweiterten Durchtrittsquerschnitt in Verbindung mit der zur Verfügung stehenden Ausbaulänge realisiert werden. Wesentlich ist bei der Bemessung, daß die beim Anliften der Schließglieder vom vergrößerten Leckagehohlraum aufzunehmende Flüssigkeit nicht bis in jenen Teil des Verbindungsweges gelangt, der zwar für die Entlüftung noch hinreichenden groß ist, der jedoch aufgrund seines reduzierten Querschnittes bei Flüssigkeitsbeaufschlagung und -führung die drucklose Ableitung der Druckentlastungsleckage nicht sicherstellen kann.

Die wirksamste Vergrößerung des Leckagehohlraums wird dann sichergestellt, wenn der Durchtrittsquerschnitt Q des erweiterten Teiles des Verbindungsweges derart bemessen ist, daß sein Wert Qmax so nah wie möglich an jenen des Nenndurchtrittsquerschnittes N des Doppelsitzventils herangeführt ist (Qmax ≤ N) oder diesen, wo dies konstruktiv möglich ist, sogar übersteigt.

Druckerhöhungen im Leckagehohlraum werden am sichersten vermieden oder am wirksamsten begrenzt, wenn der gesamte Verbindungsweg zwischen dem Leckagehohlraum und der Umgebung des Ventils durchgängig mit dem Durchtrittsquerschnitt Qmax ausgeführt ist.

Ein umgebungsseitiger Verschluß des Verbindungsweges stellt sicher, daß dieser nur dann zur Umgebung hin offen ist, wenn er seine Funktion als Weg für die Druckentlastungsleckage wahrzunehmen hat. In allen anderen Betriebszuständen bleibt er, zum Schutz gegen Eindringen von Verunreinigungen von außen, geschlossen.

Für den Fall, daß eine Druckentlastung des Leckagehohlraumes erforderlich ist, deren Entstehen sich allerdings einer planmäßigen Einflußnahme entzieht, ist vorgesehen, daß der Verschluß des Verbindungsweges in Abhängigkeit vom durch Flüssigkeit in Anspruch genommenen Speichervolumen des erweiterten Leckagehohlraumes steuerbar ist.

Bei durchgängiger Ausgestaltung des Verbindungsweges mit einem erweiterten Durchtrittsquerschnitt weist der umgebungsseitige Anschluß an diesen Verbindungsweg entsprechend große Abmessungen auf, die einen Anschluß der für die Fortführung der Druckentlastungsleckage notwendigen Leitungen erschweren. Bei Verwendung eines ersten Gehäuses, welches mit dem von der Hohlstange durchdrungenen zweiten Ventilgehäuseteil fest verbunden ist und in das die Hohlstange des zweiten Schließgliedes verschieblich eingreift, kann das vorgenannte Anschlußproblem auf außerordentlich vorteilhafte und einfache Weise gelöst werden, da nunmehr der Anschluß ortsfest ausgebildet ist.

Die Hohlstange kann so durchmesservergrößert werden, daß die 3A-Forderung hinreichend erfüllt ist. Das erste Gehäuse bildet mit seinem Innenraum gleichzeitig eine absperrbare Sicherheitszone zwischen Produktraum und Umgebung des Doppelsitzventils. Die Hohlstange und damit das mit dieser verbundene Schließglied werden im Bereich ihrer Durchführung durch das zugeordnete Ventilgehäuseteil und das angrenzende erste Gehäuse gelagert und geführt. Über die innere Hohlstange bietet sich eine zusätzliche Lagerungs- und Führungsmöglichkeit für das zugeordnete Schließglied, und zwar auf der mit dem anderen Schließglied verbundenen Ventilstange, wobei letztere über einen Ventilantrieb unabhängig angetrieben wird.

Falls bei dem vorgeschlagenen Doppelsitzventil, wie dies eine andere Ausgestaltung vorsieht, die innere Hohlstange bis in einen Ventilantrieb verlängert ist, ist eine umfassende Sitzreinigung aller Sitzbereiche des Doppelsitzventils gegeben, sofern der Ventilantrieb die Fähigkeit zur Erzeugung der jeweils erforderlichen Teiloffenstellung seiner Schließglieder besitzt.

Wird ein zwischen der inneren Hohlstange und der Ventilstange gebildeter, in den Leckagehohlraum ausmündender Ringspalt mit einen Anschluß für die Zufuhr einer Reinigungs- und/oder Spülflüssigkeit ausgestattet, so wird der Ringspalt spül- und reinigungsfähig. Hierbei kann der Anschluß innerhalb oder außerhalb des ersten Gehäuses ausgebildet sein.

Somit verfügt das vorgeschlagene Doppelsitzventil über drei Verbindungswege zwischen seiner Umgebung und dem Leckagehohlraum, nämlich über einen Verbindungsweg für die Entspannungsleckage zwischen Hohlstange und innerer Hohlstange, über einen weiteren Verbindungsweg für die Drainage innerhalb des nach unten aus dem ersten Ventilgehäuseteil herausgeführten Rohres und über einen dritten für die Zufuhr von Reinigungsflüssigkeit aus der Umgebung des Doppelsitzventils innerhalb des Ringspaltes zwischen Ventil- und innerer Hohlstange.

Beim vorgeschlagenen Doppelsitzventil können sowohl zwei axial als auch zwei radial dichtende Schließglieder vorgesehen werden, wobei letztere in einer gemeinsamen zylindrischen Sitzfläche dichtend Aufnahme finden; auch eine Kombination aus radialen und axialen Schließgliedern ist möglich.

Falls bei einer Schließgliedkonfiguration aus radial und axial dichtenden Schließgliedern die mit dem axialen Schließglied verbundene Hohlstange innenseits durchmessergleich mit dem zylindrischen Ventilsitz ausgebildet ist und in der Schließstellung des axialen Schließgliedes sein Innendurchmesser und jener des zylindrischen Ventilsitzes bündig ineinander übergehen, findet während der öffnungsbewegung des radialen Schließgliedes dieses dichtend in der Hohlstange Aufnahme, bevor das axiale Schließglied öffnet. Durch diese Ausgestaltung ist es möglich, das Doppelsitzventil waagerecht anzuordnen und dabei eine einwandfreie und vollständige Drainage des Leckagehohlraumes sicherzustellen.

Die vorgenannten Schließgliedkonfigurationen haben selbstverständlich Auswirkungen auf die notwendige Ausgestaltung des Ventilantriebes; für die vorliegende Erfindung sind derartige Überlegungen jedoch nur insoweit relevant, als sie verdeutlichen, daß die mit der Erfindung erzielbaren Vorteile nicht nur auf die in den Figuren dargestellten Schließgliedkonfigurationen beschränkt bleibt.

Werden die Dichtungsmittel der Schließglieder in den vorgenannten Konfigurationsmöglichkeiten mit wenigsten einem radial dichtenden Schließglied derart ausgebildet, daß diese Dichtungsmittel, beginnend mit der Anlage oder dem Eingriff des einen Schließgliedes am anderen bzw. in das andere Schließglied und darüber hinaus in der Offenstellung des Ventils, zusätzlich eine Abdichtung der Schließglieder gegeneinander und des Leckagehohlraumes gegenüber dem Innenraum der Ventilgehäuseteile bewirken, dann werden die beim Schalten des Doppelsitzventil auftretenden Schaltleckagen auf ein absolutes Mindestmaß reduziert oder gänzlich verhindert.

Das vorgeschlagene Doppelsitzventil ist in seinen vorstehend beschriebenen Ausführungsformen im Bereich seines Leckagehohlraumes über den Ringspalt zwischen Ventilstange und innerer Hohlstange sowohl in seiner Schließals auch in seiner Offenstellung reinigungsfähig. Darüber hinaus läßt sich bei entsprechender Ausgestaltung des Ventilantriebes eine Sitzreinigung realisieren. Dies kann durch Überführung der Schließglieder in Teiloffenstellungen erfolgen; aber es ist auch eine Reinigung zylindrischer Sitzflächen in der Schließstellung des Ventils durch gegenläufiges Auseinanderfahren der Schließglieder mögliche, wobei das notwendige Reinigungsmittel von außerhalb heranzuführen oder in anderen Bereichen des Doppelsitzventils zu "ernten" ist (vgl. Reinigungsverfahren gemäß DE 41 18 874 A1).

Bei einer weiteren Ausgestaltung des vorgeschlagenen Doppelsitzventils ist vorgesehen, daß die innere Hohlstange als Spritzdüsen ausgebildete Durchtrittsöffnungen aufweist, die den Ringspalt mit dem Verbindungsweg und/oder mit dem Innenraum des ersten Gehäuses verbinden. Hierdurch ist eine gezielte Reinigung aller reinigungskritischen Bereiche innerhalb des Leckagehohlraumes, des Verbindungsweges (beispielsweise verbindende Stege zwischen den Hohlstangen) und des Innenraumes des ersten Gehäuses möglich, und zwar durch die Zufuhr von Reinigungs- und/oder Spülflüssigkeit über den Ringspalt von außerhalb des Doppelsitzventils.

Die notwendige Reinigung des ersten Gehäuses, in das der Verbindungsweg ausmündet, gestaltet sich dann besonders einfach und wirkungsvoll, wenn zwischen der inneren Hohlstange und einem Gehäuseverschlußteil, das das erste Gehäuse zum Ventilantrieb hin verschließt und durch das die innere Hohlstange hindurchgeführt ist, ein Ringspalt vorgesehen ist, der einerseits in den Inneraum des ersten Gehäuses über eine als Spritzdüse ausgebildete Öffnung ausmündet und der andererseits mit einem ortsfesten Anschluß am Gehäuse des Doppelsitzventils verbunden ist.

Falls auf eine externe Reinigungsmittelzufuhr über den Ringspalt zwischen innerer Hohlstange und Ventilstange verzichtet werden kann oder soll, so ist dieser leckageraumseitig mit einer Dichtung zu verschließen. In diesem Falle kann der umgebungsseitige Anschluß an den Ringspalt dazu dienen, Leckagen anzuzeigen und ggf. abzuleiten. Er fungiert somit als Indikator für den Zustand der leckageraumseitigen Abdichtung des Ringspaltes.

Auf die Sicherheitszone zwischen Produktraum und Umgebung bzw. Leckageraum und Umgebung im Bereich der Durchführung des Rohres im unteren Ventilgehäuseteil muß dann nicht verzichtet werden, wenn das Rohr in einen Innenraum eines zweiten Gehäuses eingreift, welches sich an das von dem Rohr durchdrungende Ventilgehäuseteil anschließt und eine Verbindung mit der Umgebung des Ventils aufweist.

Ein flexibel ausgebildetes Rohr, beispielsweise in Form eines Schlauches oder Faltenbalges, macht die Anordnung einer aufgrund der Aufgabenstellung zu fordernden Sicherheitszone in diesem Bereich entbehrlich, da das Rohr dann an seiner Durchdringungsstelle durch das zugeordnete Ventilgehäuseteil in diesem fest eingespannt und somit statisch gegenüber diesem abgedichtet werden kann.

Ausführungsbeispiele der vorliegenden Erfindung sind in der Zeichnung dargestellt und werden im folgenden kurz erläutert. Er zeigen
- Fig. 1, 1a, 1b: in schematischer Darstellung Mittelschnitte durch das vorgeschlagene Doppelsitzventil in seinen möglichen Grundsatzlösungen;
- Fig. 2: einen halbseitigen Mittelschnitt durch eine besonders vorteilhafte Grundsatzlösung gemäß Figur 1b, wobei beide Schließglieder axial dichtend ausgebildet sind und die innere Hohlstange aus dem ersten Gehäuse herausgeführt ist;
- Fig. 2a: einen ebensolchen Mittelschnitt durch das Doppelsitzventils gemäß Figur 2, wobei im Unterschied zu letzterem beide Schließglieder radial dichtend ausgeführt sind und
- Fig. 3: einen Mittelschnitt durch eine in seinem Sitzbereich abgewandelte weitere Ausgestaltung des vorgeschlagenen Doppelsitzventils gemäß den Figuren 2 und 2a.

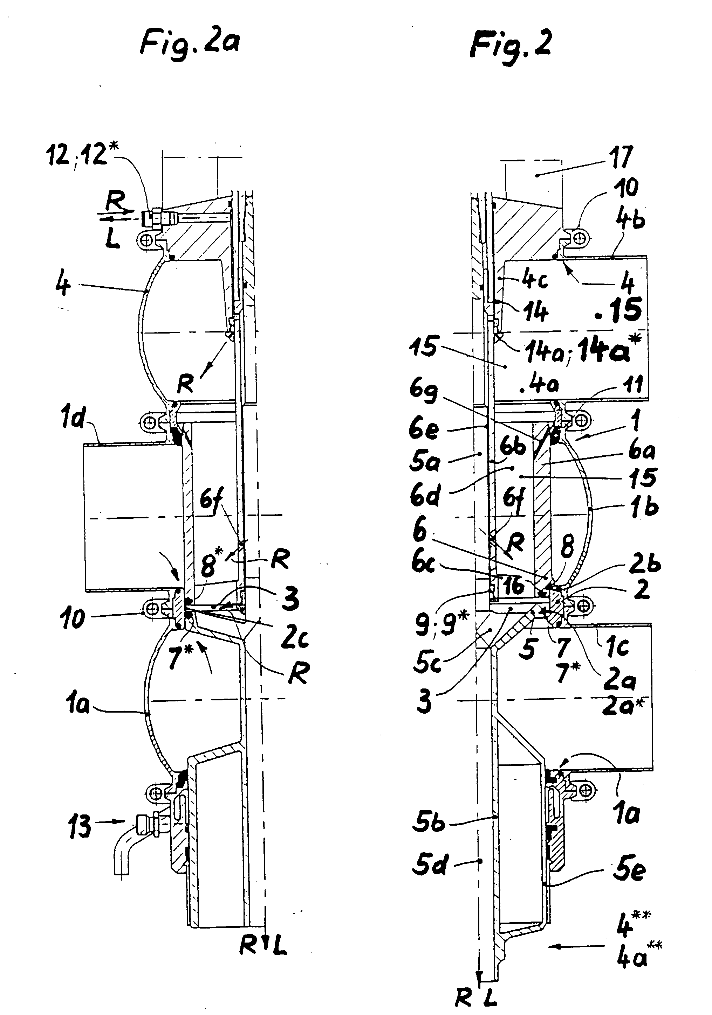

Anhand der in den Figuren 1, 1a und 1b schematisch dargestellten Grundsatzlösungen der Erfindung sollen die diesbezüglichen Unterscheidungsmerkmale verdeutlicht werden. Der detaillierte Aufbau des vorgeschlagenen Doppelsitzventils in einer vorteilhaften Ausgestaltung wird nachfolgend unter Figur 2 im einzelnen beschrieben.

In Figur 1 ist eine Hohlstange 6a lediglich bis in ein Laternenengehäuse 17, das ein zweites Ventilgehäuseteil 1b mit einem Ventilantrieb verbindet, hineingeführt; das umgebungsseitige Ende der Hohlstange 6a ist offen. Als Speichervolumen für die Druckentlastungsleckage steht ein gesamter, auf maximal möglichen Durchtrittsquerschnitt erweiterter Verbindungsweg 15 zur Verfügung. Diese Grundsatzlösung kann, bezogen auf die beiden anderen, die Druckentlastungsleckage mit dem minimalsten Druckaufbau aus einem Leckagehohlraum 3 abführen.

Bei der Grundsatzlösung gemäß Figur la ist das dem Schließglied 6 abgewandte Ende der Hohlstange 6a mit einem Gehäuse 4* verbunden, welches einen von der Hohlstange 6a gebildeten Teil 6d des Verbindungsweges 15 aus dem Bereich zwischen dem zweiten Ventilgehäuse 1b und dem Ventilantrieb an die Seite des Doppelsitzventils fortführt. Sowohl bei der Grundsatzlösung gemäß Figur la als auch bei jener der Figur 1 führt ein Druckaufbau im Leckagehohlraum 3 zu einer Kraftwirkung auf das zweite Schließglied 6, die dieses von seiner Sitzfläche abhebt oder dessen Schließkraft auf die Sitzfläche zumindest reduziert.

Figur 1b zeigt die Grundsatzlösung des vorgeschlagenen Doppelsitzventils, bei der die Hohlstange 6a in einen Innenraum 4a eines ersten Gehäuses 4 verschieblich eingreift, welches mit dem von der Hohlstange 6a durchdrungenden zweiten Ventilgehäuseteil 1b verbunden ist. Falls ein Druckaufbau im Leckagehohlraum nicht gänzlich zu vermeiden ist, so zeichnet sich diese Lösung unter anderem dadurch aus, daß auch unter diesen Bedingungen das zweite Schließglied 6 und die mit ihm verbundene Hohlstange 6a frei bleiben von verschiebenden Druckkräften (vollständiger Druckausgleich).

Ein Ventilgehäuse 1 (Fig. 2) besteht aus einem ersten und einem zweiten Ventilgehäuseteil 1a bzw. 1b mit den zugeordneten Anschlußstutzen 1c bzw. 1d. An das zweite Ventilgehäuseteil 1b schließt sich oberhalb ein erstes Gehäuse 4 mit einem Innenraum 4a und ein letzteren mit der Umgebung des Ventils verbindendes Anschlußrohr 4b an. Im Verbindungsbereich des ersten und des zweiten Ventilgehäuseteils la bzw. lb ist ein Sitzring 2 angeordnet, der über seine erste Sitzfläche 2a in Verbindung mit einem kleineren, ersten Schließglied 5 und seine zweite Sitzfläche 2b in Verbindung mit einem größeren, zweiten Schließglied 6 den Sitzbereich des Doppelsitzventils bildet. Die Schließglieder 5 und 6 sind im vorliegenden Falle axial dichtend ausgebildet.

Oberhalb des ersten Gehäuses 4 ist über das Laternengehäuse 17 eine Verbindung zu einem nicht dargestellten Ventilantrieb vorgesehen. Das erste Schließglied 5 weist eine Ventilstange 5a auf, die durch das erste Gehäuse 4 hindurchgreift und bis in den Ventilantrieb geführt ist. Das zweite Schließglied 6 setzt sich nach oben in einer Hohlstange 6a fort, die im Verbindungsbereich zwischen dem zweiten Ventilgehäuseteil 1b und dem ersten Gehäuse 4 endet. Verbindungsmittel 10 verbinden jeweils die einzelnen Gehäuseteile miteinander.

Innerhalb der Hohlstange 6a ist eine über Stege 6c mit dieser starr verbundene innere Hohlstange 6b vorgesehen, in der die Ventilstange 5a für das erste Schließglied 5 angeordnet und ggf. geführt ist. Die innere Hohlstange 6b ist einerseits nach oben durch das erste Gehäuse 4 hindurch- und aus diesem herausgeführt und andererseits endet sie in einem Leckagehohlraum 3, der zwischen den Schließgliedern 5,6 sowohl in deren Schließ- wie auch in deren Offenstellung gebildet wird. Sie begrenzt innenseits zusammen mit der Ventilstange 5a einen Ringspalt 6e, über welchen dem Leckagehohlraum 3 Reinigungsmittel R aus der Umgebung des Ventils über einen Anschluß 12 zugeführt werden kann. Zwischen den Hohlstangen 6a, 6b ist ein vom Leckagehohlraum 3 zum Innenraum 4a des ersten Gehäuses 4 führender Teil (6d) eines Verbindungsweg 15 vorgesehen, dessen Durchtrittsquerschnitt derart bemessen ist, daß er die 3A-Forderung hinreichend erfüllt.

Das axial dichtende erste Schließglied 5 ist mit einem axialen Dichtungsmittel 7 ausgestattet, das mit der ersten Sitzfläche 2a zusammenwirkt; im zweiten Schließglied 6 ist ein axiales Dichtungsmittel 8 vorgesehen, das mit der zweiten Sitzfläche 2b korrespondiert. Ein im stirnseitigen Bereich des zweiten Schließgliedes 6 angeordnetes weiteres axiales Dichtungsmittel 16 bewirkt während der Öffnungsbewegung und in der Offenstellung des Doppelsitzventils, wenn das unabhängig angetriebene, erste Schließglied 5 in diesem Dichtungsbereich am zweiten Schließglied 6 zur Anlage gekommen ist, eine Abdichtung des Leckagehohlraumes 3 gegenüber dem Innenraum des zweiten Ventilgehäuses 1b.

Das erste Schließglied 5 weist an seiner Unterseite ein Rohr 5b auf, das durch das erste Ventilgehäuseteil la hindurch- und aus diesem nach unten herausgeführt ist und dessen Ablaufbohrung 5d über Verbindungsöffnungen 5c mit dem Leckagehohlraum 3 verbunden ist.

Figur 2a zeigt das vorgeschlagene Doppelsitzventils in einer Ausführungsform, bei der Schließglieder 5,6 über ihre radialen Dichtungsmittel 7* bzw. 8* in einer gemeinsamen zylindrischen Sitzfläche 2c dichtend Aufnahme finden. Die Dichtungsmittel 7* und 8* entfalten in ihrer vorliegenden Ausführungsform jeweils neben einer radialen Dichtwirkung zusätzlich jeweils eine zum benachbarten Schließglied 6 bzw. 5 gerichtete axiale Dichtwirkung, wodurch möglicherweise auftretende Schaltleckagen auf ein absolutes Mindestmaß begrenzt oder gänzlich verhindert werden. Am nach unten aus dem ersten Ventilgehäuseteil la herausgeführten Rohr 5b ist außenseits ein Druckausgleichskolben 5e ausgebildet, der das erste Schließglied 5 nach außen hin von Kräften freistellt.

Hinsichtlich der weiteren endseitigen Ausgestaltung der inneren Hohlstange 6b existieren drei Möglichkeiten:
1. Die innere Hohlstange 6b endet, wie dargestellt, oberhalb eines Gehäuseverschlußteiles 4c innerhalb des Laternengehäuses 17, welches die Verbindung zum Ventilantrieb herstellt. Sie ist dort mit dem Anschluß 12 für die externe Zufuhr eines Reinigungsmittels R ausgestattet.
2. Die innere Hohlstange 6b ist mit dem vorstehend unter Punkt 1) erwähnten Anschluß 12 versehen und darüber hinaus bis in den Ventilantrieb verlängert. Durch diese Ausgestaltung ist es möglich, bei geeigneter Ausbildung des Ventilantriebes das größere Schließglied 6 in ein Teiloffenstellung zu überführen zwecks Durchführung einer Sitzreinigung aus dem zweiten Ventilgehäuseteil 1b.
3. Die innere Hohlstange 6b endet im Bereich des Innenraumes 4a des ersten Gehäuses 4. In diesem Falle übernimmt sie die Führungs- und Lagerungsfunktion für die Ventilstange 5a, auf der sie sich in Öffnungsrichtung des Ventils abstützt, und sie ermöglicht, falls der Anschluß 12 für die Zufuhr des Reinigungsmittels R vorhanden und im Innenraum 4a des ersten Gehäuses 4 ausgebildet ist, zusätzlich die Reinigung des Leckagehohlraumes 3, wie unter Punkt 1 beschrieben.

Im Falle einer Sitzreinigung des Doppelsitzventils gelangt über die jeweils freigelegten Sitzflächen des angesteuerten Schließgliedes 5 oder 6 Reinigungsmittel R aus dem zugeordneten Ventilgehäuseteil 1a bzw. 1b in den Leckagehohlraum 3, um von dort über das Rohr 5b abzufließen. Das abströmende Reinigungsmittel reinigt dabei die jeweiligen Sitzflächen und alle den Leckagehohlraum 3 begrenzenden Oberflächen. Übersteigt das Reinigungsmittelangebot die Ablaufleistung des Rohres 5b, so wird die druckentlastende Speicherfähigkeit des Verbindungsweges 15 (zunächst des Teiles 6d und anschließend des Innenraumes 4a) wirksam.

Da unter Umständen in den Ringspalt 6e infolge Schaltleckage oder anderer Ereignisse Produkt gelangen kann, ist es in jedem Falle erforderlich, diesen einer eigenständigen Reinigung und Spülung zu unterziehen. Das über die Sitzreinigung aus den Ventilgehäuseteilen la bzw. lb gewinnbare Reinigungsmittel R kann in diesen Ringspalt 6e allenfalls unzureichend eindringen. Eine Ringspaltreinigung erfordert daher zusätzlich eine zwangsweise Zuführung des Reinigungsmittels R aus der Umgebung des Ventils über den vorgenannten Anschluß 12. Im Zuge dieser Maßnahme ist es nun möglich, mit einem Teil des Reinigungsmittels R über als Spritzdüsen ausgebildete Durchtrittsöffnungen 6f, die den Ringspalt 6e mit dem Teil 6d des Verbindungsweges 15 und/oder mit dem Innenraum 4a des ersten Gehäuses 4 verbinden, die vorgenannten kritischen Bereiche einer gezielten Reinigung zu unterziehen.

Das dem Schließglied 6 abgewandte Ende der Hohlstange 6a ist in Verbindung mit seinem Durchtritt durch das zweite Ventilgehäuseteil 1b und das angrenzende erste Gehäuse 4 ebenfalls ein reinigungskritischer Bereich. Er kann sicher gereinigt werden über als Spritzdüsen ausgebildete Öffnungen 14a, die am Austritt eines Ringspaltes 14 angeordnet sind, der zwischen dem in den Innenraum 4a hineingreifenden Gehäuseverschlußteil 4c und der inneren Hohlstange 6b gebildet wird. Die rinnenartige Vertiefung zwischen dem vorgenannten endseitigen Teil der Hohlstange 6a und dem benachbarten Gehäuse 1b bzw 4 wird über eine Drainageverbindung 6g entleert.

Die Durchführung des Druckausgleichskolbens 5e durch das untere Ventilgehäuseteil la ist gleichfalls reinigungskritisch. Hier ist zur sicheren Reinigung dieses Bereiches eine an sich in ihrem Aufbau bekannte Reinigungseinrichtung 13 vorgesehen.

Falls auf die externe Reinigungsmittelzufuhr in die inneren Bereiche des Doppelsitzventils verzichtet werden kann oder soll, sind der leckagehohlraumseitige Austritt des Ringspaltes 6e über eine Dichtung 9* und jener des Ringspaltes 14 über eine Dichtung 14a* abzudichten. Der Anschluß 12 kann dann als Leckanzeige 12* Verwendung finden, wobei ein Leckageaustritt L an dieser Stelle einen Hinweis auf einen Defekt an einer der Dichtungen 9* bzw. 14a* gibt.

Soll das Doppelsitzventil in seiner Ausgestaltung gemäß Figur 2 leckagearm bzw. -frei arbeiten, ist das Schließglied 5 radial dichtend auszubilden, wobei das radiale Dichtungsmittel 7* mit einer zylindrischen Sitzfläche 2a* zusammenwirkt.

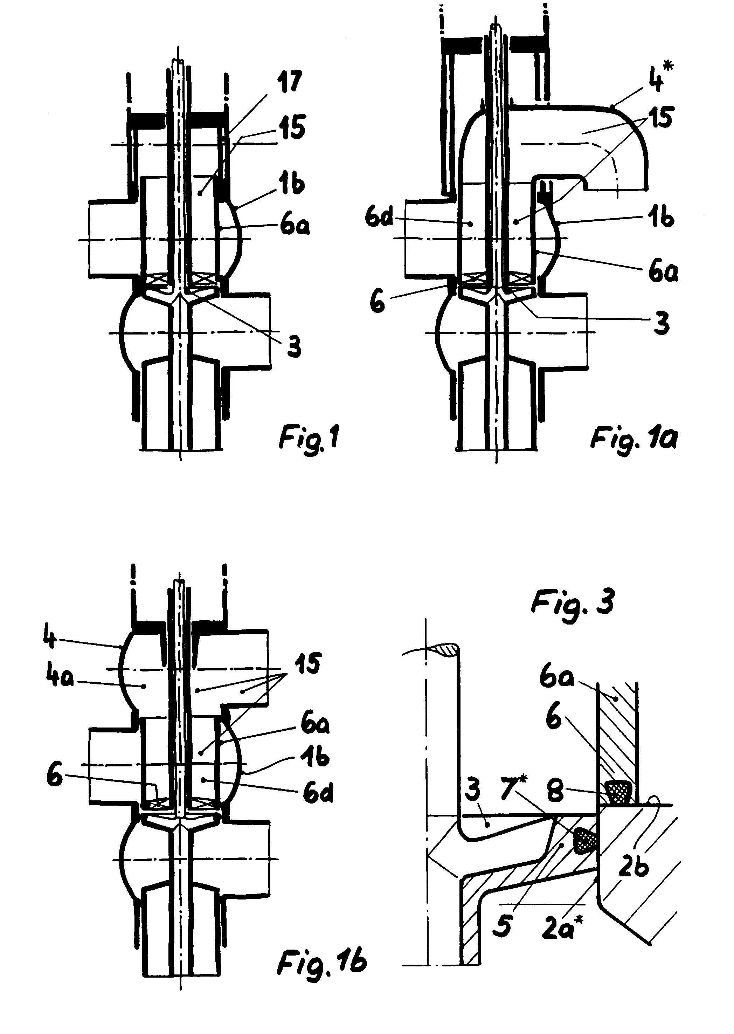

In Figur 3 sind das Schließgliedes 5 radial und das Schließglied 6 axial dichtend ausgeführt. Dabei ist die Hohlstange 6a innenseits durchmessergleich mit dem zylindrischen Ventilsitz 2a* ausgebildet, so daß in der Schließstellung der Schließglieder 5, 6 der Innendurchmesser der Hohlstange 6a und jener der zylindrischen Sitzfläche 2a* bündig ineinander übergehen. Dadurch wird erreicht, daß während der öffnungsbewegung des Schließgliedes 5 dieses dichtend in der Hohlstange 6a mit seinem radialen Dichtungsmittel 7* Aufnahme findet, bevor das Schließglied 6, welches über sein axiales Dichtungsmittel 8 mit der Sitzfläche 2b zusammenwirkt, öffnet. Durch diese Ausführungsform werden einerseits leckagefreies Schalten und andererseits eine vollständige Drainage des Leckagehohlraumes 3, selbst bei waagerechter Einbaulage des Doppelsitzventils, sichergestellt.

Im Rahmen der in den Figuren dargestellten Ausführungsbeispiele des vorgeschlagenen Doppelsitzventils ergibt sich jeweils für das zweite Schließglied 6 mit seiner Hohlstange 6a und der mit dieser über die Stege 6c verbundenen inneren Hohlstange 6b ein Bauteil, welches in dieser Form im Stand der Technik auf dem Gebiet der Doppelsitzventile kein Vorbild findet. Zum einen ist dieses aus den Teilen 6, 6a, 6b und 6c bestehende Bauteil, für sich gesehen, neu, zum anderen ist seine funktionale Einbettung in die Gesamtordnung des vorgeschlagenen Doppelsitzventils ebenfalls neu und ermöglicht erst im Rahmen dieser Gesamtanordnung besonders vorteilhafte Lösungen der der vorliegenden Erfindung zugrunde liegenden Aufgabe.

## Patentansprüche

1. Doppelsitzventil mit zwei seriell angeordneten, relativ zueinander bewegbaren Schließgliedern (5,6), die in der Schließstellung des Ventils das Überströmen von Fluiden von einem ersten Ventilgehäuseteil (1a) in ein zweites (1b) verhindern, und die sowohl in der Schließ- als auch in der Offenstellung einen Leckagehohlraum (3) begrenzen, der über ein mit dem unabhängig angetriebenen ersten Schließglied (5) verbundenes, durch das benachbarte erste Ventilgehäuseteil (la) hindurch- und aus diesem herausgeführten Rohr (5b) mit der Umgebung des Ventils verbunden ist, mit dem zweiten Schließglied (6), an welchem das erste (5) bei seiner Öffnungsbewegung zur Anlage kommt und welches dadurch gleichfalls in die Offenstellung überführt wird, und mit konzentrisch ineinander angeordneten Ventilstangen (5a,6a) für die Schließglieder (5,6), die einseitig durch das zweite Ventilgehäuseteil (1b) hindurch- und aus diesem herausgeführt sind, **dadurch gekennzeichnet**, daß die als eine Hohlstange (6a) ausgebildete Ventilstange des zweiten Schließgliedes (6) innenseits einen Speicher (6d) begrenzt, der sich unmittelbar an den Leckagehohlraum (3) anschließt und diesen über das für das Zusammenwirken der Schließglieder (5,6) mechanisch notwendige Maß hinaus um sein Speichervolumen vergrößert, wobei sich der Querschnitt des Leckagehohlraumes (3) im wesentlichen ungeschmälert in einem Durchtrittsquerschnitt (Q) des Speichers (6d) fortsetzt.

2. Doppelsitzventil nach Anspruch 1, **dadurch gekennzeichnet**, daß der Durchtrittsquerschnitt (Q) derart bemessen ist, daß sein Wert (Qmax) so nah wie möglich an jenen des Nenndurchtrittsquerschnittes (N) des Doppelsitzventils herangeführt ist (Qmax ≤ N) oder diesen nach Möglichkeit übersteigt.

3. Doppelsitzventil nach Anspruch 1 oder 2, **dadurch gekennzeichnet**, daß der Speicher (6d) an seinem dem Leckagehohlraum (3) abgewandten Ende über einen zweiten Verbindungswes (15) mit der Umgebung des Ventils verbunden ist.

4. Doppelsitzventil nach Anspruch 3, **dadurch gekennzeichnet**, daß der gesamte zweite Verbindungsweg (15) zwischen dem Speicher (6d) und seinem Ende durchgängig mit dem Durchtrittsquerschnitt (Qmax) ausgeführt ist.

5. Doppelsitzventil nach Anspruch 3 oder 4, **dadurch gekennzeichnet**, daß der zweite Verbindungsweg (15) umgebungsseitig verschließbar ist.

6. Doppelsitzventil nach Anspruch 5, **dadurch gekennzeichnet**, daß der Verschluß in Abhängigkeit vom durch Flüssigkeit in Anspruch genommenen Speichervolumen steuerbar ist.

7. Doppelsitzventil nach einem der Ansprüche 3 bis 6, **dadurch gekennzeichnet**, daß das dem Schließglied (6) abgewandte Ende der Hohlstange (6a) mit einem Gehäuse (4*) verbunden ist, welches den von der Hohlstange (6a) gebildeten Speicher (6d) und den sich anschießenden zweiten Verbindungsweg (15) aus dem Bereich zwischen dem zweiten Ventilgehäuseteil (1b) und dem Ventilantrieb an die Seite des Doppelsitzventils fortführt.

8. Doppelsitzventil nach einem der Ansprüche 3 bis 6, **dadurch gekennzeichnet**, daß die Hohlstange (6a) in einen Innenraum (4a) eines ersten Gehäuses (4) verschieblich eingreift, welches mit dem von der Hohlstange (6a) durchdrungenen zweiten Ventilgehäuseteil (1b) verbunden ist.

9. Doppelsitzventil nach einem der Ansprüche 1 bis 8, **dadurch gekennzeichnet**, daß , innenseits der oder im Anschluß an die Hohlstange (6a) eine mit dieser starr verbundene innere Hohlstange (6b) vorgesehen ist, die sich in Öffnungsrichtung des Ventils mittelbar an der Ventilstange (5a) des ersten Schließgliedes (5) abstützt.

10. Doppelsitzventil nach Anspruch 9, **dadurch gekennzeichnet**, daß die innere Hohlstange (6b) bis in den Ventilantrieb hineingeführt ist.

11. Doppelsitzventil nach Anspruch 9 oder 10, **dadurch gekennzeichnet**, daß die innere Hohlstange (6b) bis an den Leckagehohlraum (3) herangeführt ist und zusammen mit der von ihr umschlossenen Ventilstange (5a) einen Ringspalt (6e) bildet.

12. Doppelsitzventil nach Anspruch 11, **dadurch gekennzeichnet**, daß der Ringspalt (6e) einerseits in den Leckagehohlraum (3) über eine als Spritzdüse ausgebildete Öffnung (9) ausmündet und andererseits mit einem Anschluß (12) für die Zufuhr einer Reinigungs- und/oder Spülflüssigkeit (R) ausgestattet ist.

13. Doppelsitzventil nach Anspruch 12, **dadurch gekennzeichnet**, daß in der und/oder in Verbindung mit der inneren Hohlstange (6b) als Spritzdüsen ausgebildete Durchtrittsöffnungen (6f) vorgesehen sind, die den Ringspalt (6e) mit Bereichen des Speichers (6d) bzw. des Verbindungsweges (15) verbinden.

14. Doppelsitzventil nach einem der Ansprüch 10 bis 13, **dadurch gekennzeichnet**, daß zwischen der inneren Hohlstange (6b) und einem Gehäuseverschlußteil (4c), das das erste Gehäuse (4) zum Ventilantrieb hin verschließt und durch das die innere Hohlstange (6b) hindurchgeführt ist, ein Ringspalt (14) vorgesehen ist, der einerseits in den Innenraum (4a) über eine als Spritzdüse ausgebildete öffnung (14a) ausmündet und andererseits mit dem Anschluß (12) verbunden ist.

15. Doppelsitzventil nach Anspruch 11, **dadurch gekennzeichnet**, daß der Ringspalt (6e) an seiner Ausmündungsstelle in den Leckagehohlraum (3) mit einer Dichtung (9*) verschlossen und andererseits mit einem Anschluß (12*) für die Anzeige und Ableitung von Leckageflüssigkeit (L) ausgestattet ist.

16. Doppelsitzventil nach einem der Ansprüche 1 bis 15, **dadurch gekennzeichnet**, daß beide Schließglieder (5,6) jeweils mit einem axialen Dichtungsmittel (7 bzw. 8) ausgebildet sind, wobei letzteren jeweils eine Sitzf.läche (2a bzw. 2b) zugeordnet ist.

17. Doppelsitzventil nach einem der Ansprüche 1 bis 15, **dadurch gekennzeichnet**, daß beide Schließglieder (5,6) mit jeweils einem radialen Dichtungsmittel (7* bzw. 8*) ausgebildet sind, die in der Schließstellung des Ventils in einer gemeinsamen zylindrischen Sitzfläche (2c) dichtend Aufnahme finden.

18. Doppelsitzventil nach einem der Ansprüche 1 bis 15, **dadurch gekennzeichnet**, daß das erste Schließglied (5) mit dem radialen Dichtungsmittel (7*) und das zweite Schließglied (6) mit dem axialen Dichtungsmittel (8) ausgebildet sind, wobei das radiale Dichtungsmittel (7*) in der Schließstellung des Ventils in einer zylindrischen Sitzfläche (2a*) dichtend Aufnahme findet und das axiale Dichtungsmittel (8) der Sitzfläche (2b) zugeordnet ist.

19. Doppelsitzventil nach Anspruch 18, **dadurch gekennzeichnet**, daß die Hohlstange (6a) innenseits durchmessergleich mit der zylindrischen Sitzfläche (2a*) ausgebildet ist, daß in der Schließstellung des Schließgliedes (6) der Innendurchmesser der Hohlstange (6a) und jener der zylindrischen Sitzfläche (2a*) bündig ineinander übergehen, und daß während der öffnungsbewegung des Schließgliedes (5) dieses dichtend in der Hohlstange (6a) Aufnahme findet, bevor das Schließglied (6) öffnet.

20. Doppelsitzventil nach einem der Ansprüche 16 bis 19, **dadurch gekennzeichnet**, daß die Dichtungsmittel (8;7*,8*), beginnend mit der Anlage oder dem Eingriff des ersten Schließgliedes (5) am zweiten bzw. in das zweite Schließglied (6) und darüber hinaus in der Offenstellung des Ventils, zusätzlich eine Abdichtung der Schließglieder (5,6) gegeneinander und des Leckagehohlraumes (3) gegenüber dem Innenraum der Ventilgehäuseteile (la,lb) bewirken.

21. Doppelsitzventil nach einem der Ansprüche 1 bis 20, **dadurch gekennzeichnet**, daß das Rohr (5b) in einen Innenraum (4a**) eines Ablaufgehäuses (4**) eingreift, welches sich an das von dem Rohr (5b) durchdrungene Ventilgehäuseteil (la) außenseits anschließt und eine Verbindung mit der Umgebung des Ventils aufweist.

22. Doppelsitzventil nach einem der Ansprüche 1 bis 20, **dadurch gekennzeichnet**, daß das Rohr (5b) flexibel ausgebildet und an seiner Durchdringungsstelle durch das Ventilgehäuseteil (la) fest mit diesem verbunden ist.

## Claims

1. A double seat valve with two serially mounted closure elements (5, 6) movable relative to each other which prevent overflow of fluids from a first valve housing element (la) to a second (1b) when the valve is in the closed position and which in both the closed and the open position delimit a leakage cavity (3) being connected to the environment of the valve by means of a pipe (5b) connected with an independently actuated first closure element (5) and extending to and beyond the adjacent first valve housing element (la), to the second closure element (6) against which during its opening movement the first closure element (5) comes to rest, also transferring the latter to the open position, and to valve rods (5a, 6a) which are mounted concentrically one within the other for the closure elements (5, 6) and which extend through and beyond the second valve housing element (1b) on one side, **characterized in that** the valve rod of the second closure element (6), designed as a hollow rod (6a), has on the inside a reservoir (6d) immediately adjoining the leakage cavity (3) and increases the latter by the amount of its storage volume beyond the extent mechanically necessary for the combined action of the closure elements (5, 6), the cross section of the leakage cavity (3) being continued more or less with the same diameter in an aperture cross section (Q) of the reservoir (6d).

2. A double seat valve as claimed in Claim 1, **characterized in that** the aperture cross section (Q) is so dimensioned that its value (Qmax) approaches as closely as possible that of the rated aperture cross section (N) of the double seat valve (Qmax ≤ N) or if possible exceeds this value.

3. A double seat valve as claimed in Claim 1 or 2, **characterized in that** the reservoir (6d) in its end facing away from the leakage cavity (3) is connected to the environment of the valve by means of a second connecting path (15).

4. A double seat valve as claimed in Claim 3, **characterized in that** the entire second connecting path (15) between the reservoir (6d) and its end is designed to interconnect with the aperture cross section (Qmax).

5. A double seat valve as claimed in Claim 3 or 4, **characterized in that** the second connecting path (15) is closable on the environment side.

6. A double seat valve as claimed in Claim 5, **characterized in that** the closure can be controlled as a function of the storage volume occupied by the liquid.

7. A double seat valve as claimed in one of Claims 3 to 6, **characterized in that** the end of the hollow rod (6a) facing away from the closure element (6) is connected to a housing (4*) which continues the reservoir (6d) and the adjoining second connecting path (15) formed by the hollow rod (6a) from the area between the second valve housing element (1b) and the valve drive to the side of the double seat valve.

8. A double seat valve as claimed in one of Claims 3 to 6, **characterized in that** the hollow rod (6a) extends movably into an inner space (4a) of a first housing (4) that is connected to the second valve housing element (1b) penetrated by the hollow rod (6a).

9. A double seat valve as claimed in one of Claims 1 to 8, **characterized in that**, inside or adjacent to the hollow rod (6a), there is provided an inner hollow rod (6b) rigidly connected to the hollow rod (6a) that in opening direction of the valve rests indirectly on the valve rod (5a) of the first closure element (5).

10. A double seat valve as claimed in Claim 9, **characterized in that** the first inner hollow rod (6b) extends into the valve drive.

11. A double seat valve as claimed in Claim 9 or 10, **characterized in that** the inner hollow rod (6b) extends to the leakage cavity (3) and forms an annular gap (6e) together with the valve rod (5a) which it surrounds.

12. A double seat valve as claimed in Claim 11, **characterized in that** the annular gap (6e) on one side ends in the leakage cavity (3) by way of an opening (9) in the form of a spray nozzle and on the other is provided with a connection (12) for delivery of a cleaning and/or rinsing liquid (R).

13. A double seat valve as claimed in Claim 12, **characterized in that** aperture openings (6f) in the form of spray nozzles which connect the annular gap (6e) to areas of the reservoir (6d) and the connecting path (15) respectively are provided in and/or in conjunction with the inner hollow rod (6b).

14. A double seat valve as claimed in one of Claims 10 to 13, **characterized in that** an annular gap (14), which on one side ends in the inner space (4a) by way of an opening (14a) in the form of a spray nozzle and on the other is connected with the connection (12), is provided between the inner hollow rod (6b) and a housing closure element (4c) that closes off the housing (4) in the direction of the valve drive and through which the inner hollow rod (6b) extends.

15. A double seat valve as claimed in Claim 11, **characterized in that** the annular gap (6e) is closed at its outlet into the leakage cavity (3) with a sealing (9*) and on the other side is provided with a connection (12*) for indication and drainage of leakage fluid (L).

16. A double seat valve as claimed in one of Claims 1 to 15, **characterized in that** both closure elements (5, 6) are designed with an axial sealing means each (7 and 8 respectively), with a seat surface each (2a and 2b respectively) being assiqned to the latter.

17. A double seat valve as claimed in one of Claims 1 to 15, **characterized in that** both closure elements (5, 6) are designed with a radial sealing means each (7* and 8* respectively) which in the closed position of the valve are held tightly in a common cylindrical seat surface (2c).

18. A double seat valve as claimed in one of Claims 1 to 15, **characterized in that** the first closure element (5) is designed with the radial sealing means (7*) and the second closure element (6) is designed with the axial sealing means (8), with the radial sealing means (7*) being held tightly in a cylindrical seat surface (2a*) in the closed position of the valve, and the axial sealing means (8) being assigned to the seat surface (2b).

19. A double seat valve as claimed in Claim 18, **characterized in that** the hollow rod (6a) has the same inner diameter as the cylindrical seat surface (2a*), that in the closed position of the closure element (6), the inner diameter of the hollow rod (6a) and the inner diameter of the cylindrical seat surface (2a*) are flush and that during the opening movement of the closure element (5), the latter is held tightly in the hollow rod (6a) before the closure element (6) opens.

20. A double seat valve as claimed in one of Claims 16 to 19, **characterized in that** the sealing means (8, 7*, 8*), beginning with the joining or the engagement of the first closure element (5) to or into and beyond the second closure element (6) in the open position of the valve also cause a sealing of the closure elements (5, 6) from each other and of the leakage cavity (3) from the inner space of the valve housing elements (1a, 1b).

21. A double seat valve as claimed in one of Claims 1 to 20, **characterized in that** the pipe (5b) extends into an inner space (4a**) of a drainage housing (4**) which is adjacent to the outside of the valve housing element (la) penetrated by the pipe (5b) and comprises a connection with the environment of the valve.

22. A double seat valve as claimed in one of Claims 1 to 20, **characterized in that** the pipe (5b) is designed flexibly and is rigidly connected to the valve housing element (la) at its penetration point through the latter.

## Revendications

1. Soupape à double siège comportant deux organes de fermeture (5,6) disposés en série et déplaçables l'un par rapport à l'autre et qui, lorsque la soupape est dans la position fermée, empêchent le transfert de fluides d'une première partie (1a) du boîtier de soupape dans une seconde partie (1b) de ce boîtier, et qui, aussi bien dans la position fermée que dans la position ouverte, délimitent une cavité de fuite (3) qui est reliée à l'environnement de la soupape par l'intermédiaire d'un tube (5b) relié au premier organe de fermeture (5) entraîné de façon indépendante, ce tube étant guidé à travers la première partie voisine (la) du boîtier de soupape et en ressortant en étant guidé, le premier organe de fermeture (6) venant s'appliquer contre le second organe de fermeture (6) lors de son déplacement d'ouverture et étant de ce fait également placé dans sa position ouverte, la soupape comportant également des tiges de soupape (5a, 6a) pour les organes de fermeture (5,6), disposées concentriquement l'une dans l'autre et guidées, d'un côté, à travers la seconde partie (1b) du boîtier de soupape et en ressortent en étant guidées, caractérisée en ce que la tige de soupape, réalisée sous la forme d'une tige creuse (6a), du second organe de fermeture (6) délimite intérieurement un accumulateur (6d) qui se raccorde directement à la cavité de fuite (3) et augmente cette dernière de son volume d'accumulation, au-delà de la taille nécessaire du point de vue mécanique pour la coopération des organes de fermeture (5,6), la section transversale de la cavité de fuite (3) se prolongeant, essentiellement sans rétrécissement, par une section transversale de passage (Q) de l'accumulateur (6d).

2. Soupape à double siège selon la revendication 1, caractérisé en ce que la section transversale du passage (Q) est dimensionnée de telle sorte que sa valeur (Qmax) se rapproche autant que possible de celle de la section transversale nominale de passage (N) du siège de soupape double (Qmax ≤ N) ou dépasse éventuellement cette valeur.

3. Soupape à double siège selon la revendication 1 ou 2, caractérisé en ce que l'accumulateur (6d) est relié, au niveau de son extrémité tournée à l'opposé de la cavité de fuite (3), à l'environnement de la soupape par l'intermédiaire d'une seconde voie de liaison (15).

4. Soupape à double siège selon la revendication 3, caractérisée en ce que l'ensemble de la seconde voie de liaison (15) entre l'accumulateur (6d) et son extrémité est réalisé d'une manière générale avec la section transversale de passage (Qmax).

5. Soupape à double siège selon la revendication 3 ou 4, caractérisée en ce que la seconde voie de liaison (15) peut être fermée du côté de l'environnement.

6. Soupape à double siège selon la revendication 5, caractérisée en ce que la fermeture peut être commandée en fonction du volume d'accumulation requis par le liquide.

7. Soupape à double siège selon l'une des revendications 3 à 6, caractérisée en ce que l'extrémité, tournée à l'opposé de l'organe de fermeture (6), de la tige creuse (6a) est reliée à un boîtier (4*) qui prolonge l'accumulateur (6d) formé par la tige creuse (6a), et la seconde voie de liaison (15) qui s'y raccorde, à partir de la zone située entre la seconde partie (1b) du boîtier de soupape et le dispositif d'entraînement de soupape, sur le côté de la soupape à double siège.

8. Soupape à double siège selon l'une des revendications 3 à 6, caractérisée en ce que la tige creuse (6a) s'engage, de manière à pouvoir s'y déplacer, dans un espace intérieur (4a) d'un premier boîtier (4), relié au second élément (1b) du boîtier de soupape traversé par la tige creuse (6a).

9. Soupape à double siège selon l'une des revendications 1 à 8, caractérisée en ce que sur le côté intérieur ou à la suite de la tige creuse (6a) est prévue une tige creuse intérieure (6b), reliée rigidement à cette dernière et prenant appui indirectement contre la tige de soupape (5a) du premier organe de fermeture (5), dans le sens d'ouverture de la soupape.

10. Soupape à double siège selon la revendication 9, caractérisée en ce que la tige creuse intérieure (6b) pénètre jusque dans le dispositif d'entraînement de la soupape.

11. Soupape à double siège selon la revendication 9 ou 10, caractérisée en ce que la tige creuse intérieure (6b) est guidée jusqu'à la cavité de fuite (3) et forme, conjointement avec la tige de soupape (5a) entourée par cette tige creuse, une fente annulaire (6e).

12. Soupape à double siège selon la revendication 11, caractérisée en ce que la fente annulaire (6e) d'une part débouche dans la cavité de fuite (3) par l'intermédiaire d'une ouverture (9) agencée sous la forme d'une buse de projection et d'autre part est équipée d'un raccord (12) pour l'envoi d'un liquide de nettoyage et/ou d'un liquide de lavage (R).

13. Soupape à double siège selon la revendication 12, caractérisée en ce que dans la tige intérieure creuse (6b) ou en liaison avec cette tige sont prévues des ouvertures de passage (6f) agencées sous la forme de buses de projection qui relient la fente annulaire (6d) aux zones de l'accumulateur (6d) ou de la voie de liaison (15).

14. Soupape à double siège selon l'une des revendications 10 à 13, caractérisée en ce qu'entre la tige creuse intérieure (6b) et un élément (4c) de fermeture du boîtier fermant le premier boîtier (4) vis-à-vis du dispositif d'entraînement de la soupape et à travers lequel est guidée la tige intérieure creuse (6b), est prévue une fente annulaire (14) qui d'une part débouche dans l'espace intérieur (4a) par l'intermédiaire d'une ouverture (14a) réalisée en tant que buse de projection et d'autre part est reliée au raccord (12).

15. Soupape à double siège selon la revendication 11, caractérisée en ce que la fente annulaire (6e) est fermée au niveau de sa partie dans laquelle elle débouche dans la cavité de fuite (3), par une garniture d'étanchéité (9*) et d'autre part est équipée d'un raccord (12*) pour l'indication et la dérivation d'un liquide de fuite (L).

16. Soupape à double siège selon l'une des revendications 1 à 15, caractérisée en ce que les deux organes de fermeture (5,6) sont agencés respectivement avec un moyen d'étanchéité axial (7 ou 8), une surface d'appui (2a ou 2b) étant respectivement associée à ce moyen d'étanchéité.

17. Soupape à double siège selon l'une des revendications 1 à 15, caractérisée en ce que les deux organes de fermeture (5,6) sont équipés de moyens radiaux respectifs d'étanchéité (7* ou 8*), qui, lorsque la soupape est dans la position fermée, s'appliquent d'une manière étanche contre une surface cylindrique commune formant siège (2c).

18. Soupape à double siège selon l'une des revendications 1 à 15, caractérisée en ce que le premier organe de fermeture (5) est équipé du moyen radial d'étanchéité (7*) et le second organe de fermeture (6) est équipé du moyen axial d'étanchéité (8), le moyen radial d'étanchéité (7*) étant appliqué de façon étanche contre une surface d'appui cylindrique (2a*) lorsque la soupape est dans la position fermée et le moyen axial d'étanchéité (8) étant associé à la surface d'appui (2b).

19. Soupape à double siège selon la revendication 18, caractérisée en ce que la tige creuse (6a) comporte côté intérieur une surface d'appui cylindrique (2a*), ayant un diamètre constant, en ce que lorsque l'organe de fermeture (6) est dans la position fermée, la circonférence intérieure de la tige creuse (6a) et celle de la surface d'appui (2a*) se prolongent de niveau l'une l'autre et que pendant le déplacement d'ouverture de l'organe de fermeture (5), ce dernier est logé d'une manière étanche dans la tige creuse (6a) avant que l'organe de fermeture (6) ne s'ouvre.

20. Soupape à double siège selon l'une des revendications 16 à 19, caractérisée en ce qu'au début de l'application ou de l'engagement du premier organe de fermeture (5) contre ou dans le second organe de fermeture (6) et en outre lorsque la soupape est en position ouverte, les moyens d'étanchéité (8;7*, 8*) réalisent en outre une étanchéité des organes de fermeture (5,6) entre eux et de la cavité de fuite (3) par rapport à l'espace intérieur des parties (1a, 1b) du boîtier de soupape.

21. Soupape à double siège selon l'une des revendications 1 à 20, caractérisée en ce que le tube (5b) s'engage dans un espace intérieur (4a**) d'un boîtier de sortie (4**), qui se raccorde, côté extérieur, à l'élément (la) du boîtier de soupape traversé par le tube (5b), et établit une liaison avec l'environnement de la soupape.

22. Soupape à double siège selon l'une des revendications 1 à 20, caractérisée en ce que le tube (5b) est agencé de manière à être flexible et, au niveau de son point de traversée dans l'élément (la) du boîtier de soupape, est relié rigidement à cet élément.
